# EUROPEAN PATENT APPLICATION

(11) **EP 0 983 896 A2**
(43) Date of publication of application: **08.03.2000**
(21) Application number: 99830451.3
(22) Date of filing: 15.07.1999
(51) Int. Cl.: B60N 2/44

(54) **Universal seat cover for seat with airbag**

(30) Priority: 03.09.1998 IT PR980053
(71) Applicant: Novafresk S.r.l., 46019 Viadana (Mantova) (IT)
(72) Inventor: Germani, Walter, 46019 Viadana (Mantova) (IT)
(74) Representative: Gotra, Stefano

(57) **Abstract**

Seat cover (1) for seat with airbag, having a side portion (2) for easy inflation which is kept in contact with the seat by restraining means (3).

## Description

The present invention relates to a universal seat cover for seat with airbag. "Universal seat cover" is understood as meaning a seat cover which can be adapted to different seats of a given category of motor car.

Seat covers used for motor vehicle seats not fitted with lateral airbags are known. The use of these seat covers cannot be adapted to seats fitted with lateral airbags because the structure of the seat cover itself may delay or even prevent inflation of the airbag, reducing or eliminating the advantages thereof.

In the case of seats fitted with lateral airbags, seat covers which are open laterally in the region of the airbag, so as to allow correct inflation thereof, are also known.

This solution has the drawback that it is inconvenient, impractical and unaesthetic since the seat cover does not cover the seat entirely and therefore may move with respect to the latter during normal use.

Another solution is that described in German patent No. 19648529 which envisages covering the side opening, in the region of the airbag, with a layer of fabric which is applied by means of fastening elements (such as velcro) which are removable as a result of the pressure exerted by the airbag when inflated.

Another solution, which is again described in the said German patent, is that of providing a slit in the fabric of the seat cover, the edges of which are joined together by threads which may be easily broken or by parts which may be opened by means of tearing.

These solutions have the drawback that they cannot be applied to universal seat covers, i.e. adapted to seats of a given category of motor car.

The object of the present invention is that of eliminating the abovementioned drawbacks and providing a seat cover for seat with airbag which allows correct inflation of the airbag and which adheres to the seat during normal use. This seat cover may be designed to fit all conventional seats or may be made-to-measure.

Said objects are fully achived by the seat cover for seat with airbag according to the present invention, which is characterized by the contents of the claims indicated below.

In particular, the abovementioned seat cover is characterized by the fact that it comprises, in the region of the airbag, a side portion for easy inflation, comprising a layer of mesh or other equivalent material which is combined with a layer of non-slip material.

Moreover the side portion of the seat cover is kept in contact with the seat by restraining means.

These and other characteristic features will emerge more clearly from the following description of a preferred embodiment illustrated, purely by way of a non-limiting example, in the accompanying plate of drawings in which:
- Figure 1 shows a perspective view of the seat cover;
- Figure 2 shows a cross-section of the side portion;
- Figure 3 shows a detail of the side portion.

With reference to the Figures, 1 denotes a seat cover and 2 a side portion for easy inflation located in the region of the airbag.

The general structure of the seat cover 1 is essentially of the known type; it differs in an original manner owing to the form of the side portion 2 which has an easy-inflation design allowing the airbag to open correctly.

The lateral airbag is situated on the side of the seat in the vicinity of the door, hence on the left-hand side of the left-hand front seat and on the right-hand side of the right-hand front seat. Consequently, the side portion 2 of the seat cover 1 is located on the left-hand side in the case where it must be used for the left-hand front seat or on the right-hand side in the case of the right-hand front seat.

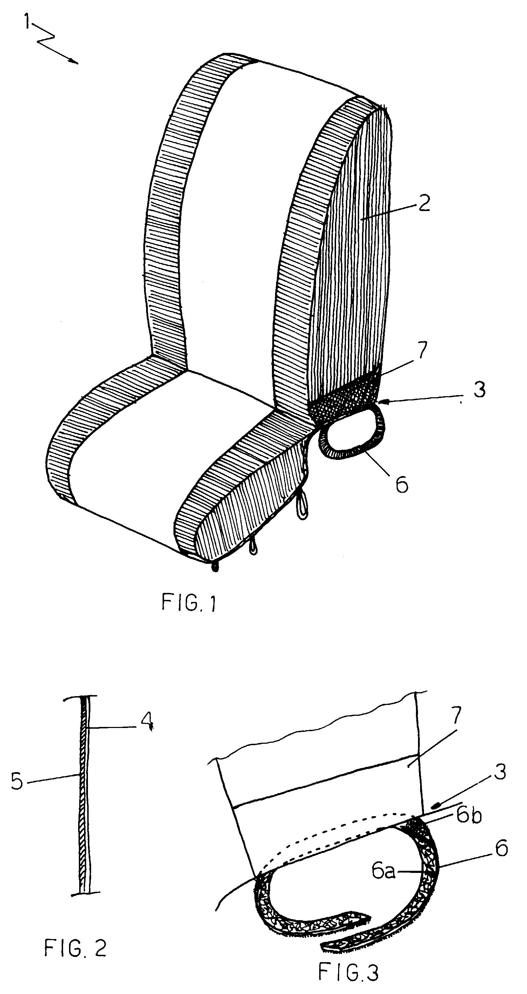

Figure 1 shows a seat cover 1 for a left-hand front seat, namely fitted with an airbag on the left-hand side; hence the side portion 2 for easy inflation is positioned on the left-hand side of the seat cover 1. The following description refers to Figure 1, but it is obvious that the seat cover 1 may be designed as a left-hand or right-hand version depending on the seat to which it must be fitted.

As shown in Figure 2, the side portion 2 for easy inflation is formed by two layers: a layer of mesh 4 or other equivalent material and a layer of non-slip material 5.

The layer of mesh 4 has a weight of between 15 and 18 g/m².

The non-slip layer 5 consists of expanded polyester or polyether flame-welded or bonded to the mesh layer 4.

The density and softness characteristics of the layer of non-slip material 5 must be such as to ensure adherence between the seat cover 1 and the underlying seat so as to prevent movement or puckering.

The seat cover 1 is fixed to the frame of the seat by restraining means comprising a strip of velcro 6 which can be attached to a fastening part 7 of the side portion 2. This fastening part 7 consists of a strip of material acting as a female receiving part for the velcro and generally referred to as a velvet band.

The velcro strip 6 has, on one side, a male layer 6b and, on the other side, a female layer 6a for closing automatically the velcro strip 6, forming a ring for wrapping around the frame of the seat.

The male layer 6b is located on the outside of the ring so as to be able to be attached to the fastening part 7 or velvet band, thus keeping the seat cover 1 fixed to the seat frame.

Other means for performing fastening between the seat cover 1 and the frame of the seat are possible, such as ordinary velcro, hooks or knotted parts.

In this way the seat cover is firmly secured to the seat during normal use, whereas, in the event of inflation of the lateral airbag, the seat cover does not prevent correct operation thereof.

Even though, in the description and in the drawings, specific reference has always been made to the front seats of a motor car, the innovative idea of the easy-inflation side portion described above may also be advantageously applied to the sides of the backrest of the rear seat of a motor car.

## Claims

1. Universal seat cover (1) for seat with airbag, characterized in that it comprises, in the region of the airbag, a side portion (2) for easy inflation which is designed to allow the airbag to open correctly.

2. Seat cover (1) according to Claim 1, characterized in that the side portion (2) for easy inflation comprises a layer of mesh (4) or other equivalent material combined with a layer of non-slip material (5).

3. Seat cover (1) according to Claim 2, characterized in that the layer of mesh (4) has a density of 15-18 g/m².

4. Seat cover (1) according to Claim 2, characterized in that the layer of non-slip material (5) consists of expanded polyester.

5. Seat cover (1) according to Claim 2, characterized in that the layer of non-slip material (5) consists of expanded polyether.

6. Seat cover (1) according to Claim 1, characterized in that the side portion (2) is kept in contact with the seat by restraining means (3).

7. Seat cover (1) according to Claim 6, characterized in that the restraining means (3) comprise a velcro strip (6) which is designed to be wrapped around the frame of the seat and can be attached to a fastening part (7) of the side portion (2) of the seat cover (1).

8. Seat cover (1) according to Claim 7, characterized in that the velcro strip (6) has, on one side, a male layer (6b) and, on the other side, a female layer (6a) so as to close automatically the velcro strip (6), forming a ring designed to be wrapped around the frame of the seat and to be attached to the fastening part (7), thereby fixing the seat cover (1).

9. Seat cover (1) according to Claim 7, characterized in that the fastening part (7) of the side portion (2) comprises a velvet band acting as a female receiving part for the velcro strip (6).

10. Seat cover (1) according to any one of the preceding claims, characterized in that the side portion (2) for easy inflation is located on the left-hand side of the seat cover (1).

11. Seat cover (1) according to any one of Claims 1 to 9, characterized in that the side portion (2) for easy inflation is located on the right-hand side of the seat cover (1).
